Europäisches Patentamt

European Patent Office

Office européen des brevets

(11) Numéro de publication: **0 381 602**

**A1**

## (12) DEMANDE DE BREVET EUROPEEN

(21) Numéro de dépôt: **90420048.2**

(22) Date de dépôt: **30.01.90**

(51) Int. Cl.⁵: **B25J 9/04, B25J 9/12, H02K 7/20, B23Q 1/14**

(30) Priorité: **01.02.89 FR 8901505**

(43) Date de publication de la demande:
**08.08.90 Bulletin 90/32**

(84) Etats contractants désignés:
**CH DE ES FR GB IT LI**

(71) Demandeur: **S.A. DES ETABLISSEMENTS STAUBLI (France)**
**B.P. 20 183 Rue des Usines**
**F-74210 Faverges(FR)**

(72) Inventeur: **Bourgeaux, Pierre**
**77 Route de la Montagne, Lachat**
**F-74330 Poisy(FR)**

(74) Mandataire: **Monnier, Guy et al**
**Cabinet Monnier 150 Cours Lafayette B.P. 3058**
**F-69393 Lyon Cédex 03(FR)**

(54) **Dispositif pour la commande en rotation et en translation de la broche porte-outil ou porte-pièce d'un robot industriel ou manipulateur.**

(57) La carcasse statorique (9) du moteur électrique qui assure l'entraînement en rotation de la broche porte-outil ou porte-pièce (10a) du robot est directement guidée à l'intérieur de la tête (8) par deux jeux superposés de galets, de façon à se déplacer axialement dans ladite tête sous d'effet d'un mécanisme de crémaillère commandé par un moteur indépendant (23).

Fig. 1

La présente invention a trait aux robots industriels ou manipulateurs destinés à l'usinage ou au montage de pièces mécaniques, et elle concerne plus particulièrement les dispositifs utilisés pour assurer la commande en rotation et en translation ou "plongée" de la broche porte-outil ou porte-pièce des robots articulés du type dit "SCARA".

On sait que les robots de ce type comprennent généralement une embase à axe vertical sur laquelle tourne, suivant l'axe précité, un carter horizontal coudé ou "bras" en bout duquel est monté à rotation un ensemble équivalent ou "avant-bras". L'extrémité libre de cet avant-bras est pourvue d'une tête à axe vertical à l'intérieur de laquelle tourne une broche porte-outil ou porte-pièce qui est susceptible de se déplacer axialement en translation (mouvement dit "de plongée").

Pour assurer la commande des deux mouvements de rotation et de translation de la broche, on a habituellement recours à des agencements complexes et coûteux, incorporant notamment des systèmes à pignons coniques ou des mécanismes de vis à billes dont la fiabilité est réduite et la maintenance en état relativement difficile.

C'est à cet inconvénient qu'entend principalement remédier l'invention, laquelle a pour objet le dispositif de commande défini à la revendication 1.

Le dessin annexé, donné à titre d'exemple, permettra de mieux comprendre l'invention, les caractéristiques qu'elle présente et les avantages qu'elle est susceptible de procurer :

Fig. 1 est une coupe verticale schématique montrant l'agencement général d'un robot équipé d'un dispositif de commande suivant l'invention.

Fig. 2 est une coupe axiale partielle illustrant à plus grande échelle le montage coulissant du moteur d'entraînement en rotation à l'intérieur de la tête du robot, le plan de coupe ayant été indiqué en II-II en fig. 1.

Fig. 3 et 4 sont des coupes transversales suivant les plans respectivement indiqués en III-III et IV-IV en fig. 2.

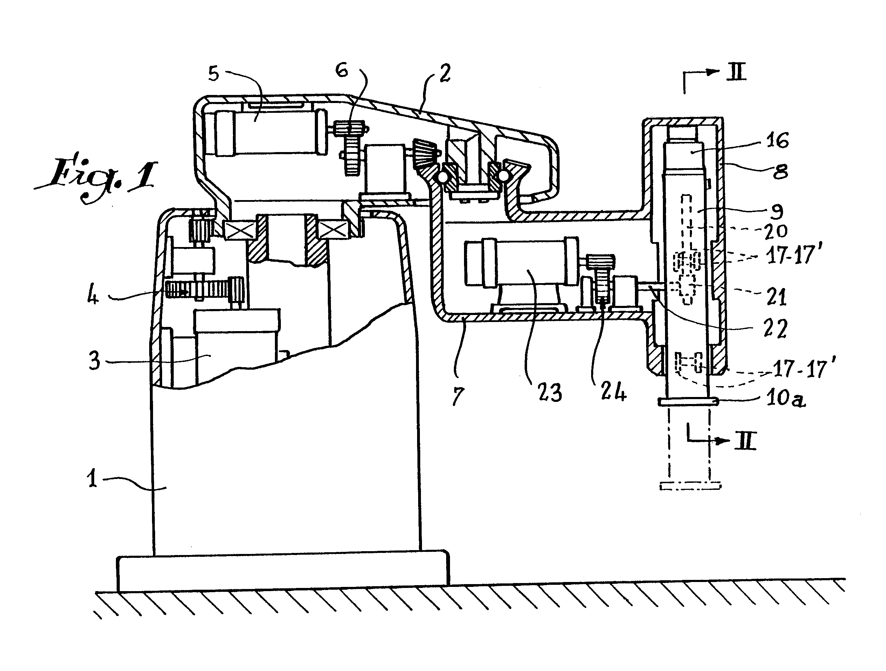

En fig. 1, on a schématiquement représenté en 1 l'embase d'un robot industriel du type "SCARA", qui supporte à rotation la partie inférieure cylindrique d'un carter à profil en équerre ou "bras" 2. La commande en rotation de ce bras 2 est opérée par un moteur 3 à axe vertical qui est monté dans l'embase 1 et qui coopère, à travers un mécanisme réducteur 4, avec une denture ménagée sur la partie cylindrique précitée.

De la même manière, le bras 2 renferme un moteur 5 qui entraîne, par l'intermédiaire d'un mécanisme réducteur 6, un carter horizontal analogue ou "avant-bras" 7, lequel est solidaire d'un prolongement cylindrique ou tête 8 à axe vertical.

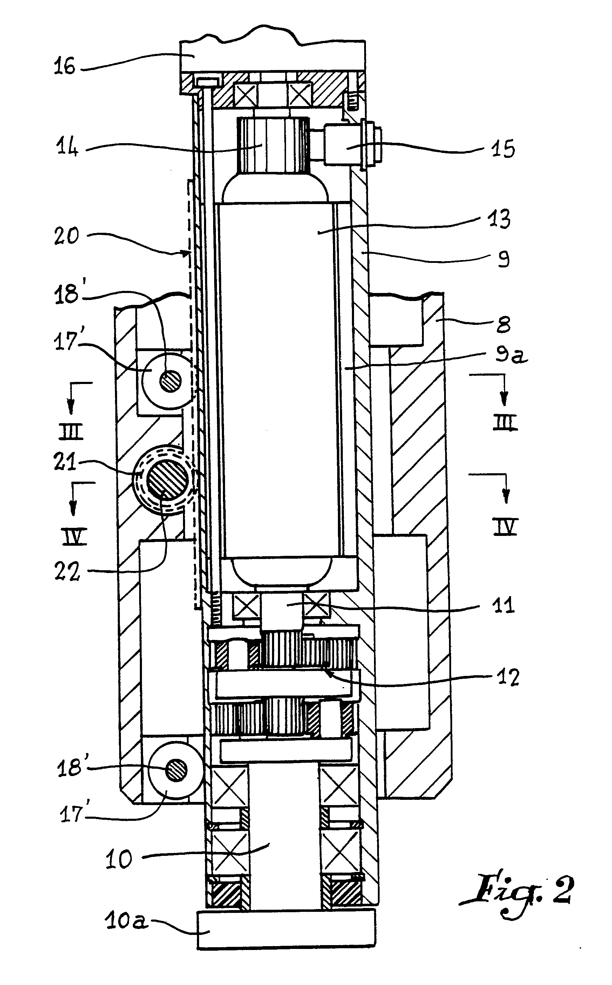

Conformément à l'invention et comme représenté plus en détail en fig. 2 à 4, dans l'espace intérieur de la tête 8 est montée une chemise cylindrique 9 qui est aménagée pour constituer la carcasse statorique porte-aimants du moteur électrique destiné à l'entraînement en rotation de la broche porte-outil ou porte-pièce du robot. En fait, cette broche est constituée par un bout d'arbre 10 qui est porté axialement dans la chemise ou carcasse 9 et dont une extrémité est équipée d'un plateau de type usuel 10a pour la fixation d'un outil ou d'une pièce, tandis que l'extrémité opposée est reliée à l'arbre 11 du moteur électrique précité à travers un mécanisme réducteur approprié 12, ici supposé du type épicycloïdal à deux étages.

En vis à vis des aimants 9a qui forment le stator, l'arbre 11 supporte les bobinages du rotor 13, ce dernier étant surmonté par un collecteur 14 coopérant avec des balais et porte-balais radiaux 15 portés par la carcasse 9. l'arbre 11 se prolonge au-dessus du collecteur 14 pour coopérer avec un frein automatique 16, de type électro-magnétique ou similaire, propre à assurer le blocage instantané de l'arbre précité dès que le moteur 9-13 n'est plus excité.

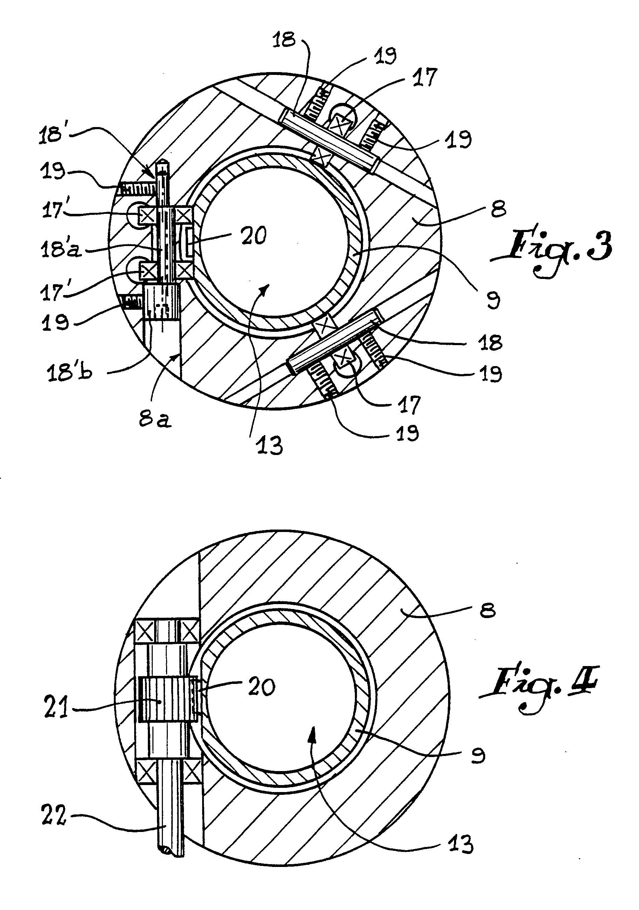

Le guidage de la carcasse 9 à l'intérieur de la tête 8 est assuré par deux jeux superposés de galets 17, chaque jeu comprenant trois galets disposés à 120° les uns par rapport aux autres, à la manière illustrée en fig. 3. Chaque galet 17 est monté fou sur un petit axe ou support 18 immobilisé axialement dans son alésage à l'aide de vis de pression 19.

On observera que dans chacun des deux jeux superposés de galets, l'un de ceux-ci est réalisé sous forme double en comprenant deux organes 17' espacés l'un de l'autre sur le support 18' correspondant. En réalité, ces deux organes 17' sont montés sur une partie centrale 18'a du support 18' qui est excentrée par rapport à l'axe commun à la tête 18'b et à l'extrémité libre de celui-ci, de telle sorte qu'en faisant tourner ladite tête 18'b dans l'alésage élargi 8a qui la renferme, on modifie la position radiale des organes 17' par rapport à la carcasse 9 et on règle au plus juste le jeu de cette dernière entre les galets 17-17' des deux jeux superposés.

Les organes 17' sont appliqués contre un méplat ménagé sur la paroi extérieure de la carcasse 9 et sur ce méplat est rapportée ou usinée une denture longitudinale de crémaillère 20. Entre les deux jeux superposés de galets 17, cette denture 20 coopère avec un pignon 21 (fig. 4) calé sur un arbre horizontal 22. Comme montré en fig. 1, cet arbre 22 est relié à un moteur d'entraînement 23 à travers un mécanisme réducteur 24.

Le fonctionnement du dispositif de commande découle des explications qui précèdent et se comprend aisément. Le moteur 23 assure le mouvement de plongée de la broche 10 qui peut ainsi être amenée à toute position axiale désirée moyennant coulissement de la carcasse 9 dans la tête 8. Par ailleurs, le moteur 9-13 permet bien le réglage précis de l'orientation de cette broche 10, ledit réglage étant susceptible d'être obtenu indépendamment du positionnement axial.

Le montage de la carcasse 9 dans la tête 8 à l'aide des galets 17-17′ et la possibilité de régler le jeu et de rattraper l'usure autorise l'obtention d'une précision très élevée dans le positionnement angulaire et axial du plateau 10a de la broche 10.

On conçoit notamment que la chemise ou concasse 9 peut supporter des bobinages formant stator et coopérant avec des aimants tournants constituant le rotor monté sur l'arbre 11.

## Revendications

1. Dispositif pour la commande en rotation et en translation de la broche porte-outil ou portepièce d'un robot industriel ou manipulateur, ladite broche, montée à coulissement à l'intérieur d'une tête transversale prévue en bout de l'avant-bras dudit robot, étant associée à deux moteurs d'entraînement indépendants, caractérisé en ce que la broche (10) est liée à l'arbre (11) du premier moteur électrique dont la carcasse statorique (9) est directement guidée par des jeux superposés de galets (17) pour se déplacer axialement à l'intérieur de la tête (8) sous l'effet du second moteur (23) qui entraîne un pignon (21) coopérant avec une denture de crémaillère (20) prévue sur la paroi extérieure de la carcasse précitée.

2. Dispositif suivant la revendication 1, caractérisé en ce que dans chaque jeu, l'un au moins (17′) des galets (17) est prévu réglable en position radiale de façon à permettre le rattrapage du jeu existant entre la carcasse (9) et l'ensemble des galets.

3. Dispositif suivant la revendication 2, caractérisé en ce que chaque galet réglable (17′) est porté par une partie excentrée (18′a) d'un support (18′) susceptible d'être réglé angulairement en position.

4. Dispositif suivant l'une quelconque des revendications 1 à 3, caractérisé en ce que l'un des galets (17) de chaque jeu est constitué par deux organes (17′) montés sur le support (18′) à un écartement propre à laisser place à la denture de crémaillère (20).

Fig. 1

*Fig. 2*

*Fig.3*

*Fig.4*

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | US-A-4712973 (GARIN)<br>* colonne 1, ligne 58 - colonne 2, ligne 39 *<br>--- | 1 | B25J9/04<br>B25J9/12<br>H02K7/20 |
| A | FR-A-1294336 (CAROSSINO)<br>* page 2, colonne 2, lignes 4 - 25 *<br>--- | 1 | B23Q1/14 |
| A | FR-A-2230450 (SOCIETA INDUSTRIALE VENETA)<br>* page 3, lignes 13 - 32 *<br>--- | 1 | |
| A | FR-A-2587690 (CERMA)<br>* page 1, lignes 31 - 38; figure 1 *<br>--- | 2, 3 | |
| A | DE-U-8626627 (PFAFF-SILBERBLAU HEBEZEUGFABRIK GMBH)<br>* page 5, ligne 29 - page 6, ligne 37 *<br>--- | 2-4 | |
| A | DE-A-2516471 (BLOCHER-MOTOR KG)<br>* page 7, lignes 1 - 16 *<br>----- | 1 | |

DOMAINES TECHNIQUES
RECHERCHES (Int. Cl.5 )

B25J
H02K
B23Q

*Le présent rapport a été établi pour toutes les revendications*

| Lieu de la recherche | Date d'achèvement de la recherche | Examinateur |
|---|---|---|
| LA HAYE | 14 MAI 1990 | LAMMINEUR P.C.G. |